# EUROPEAN PATENT APPLICATION

(11) **EP 2 445 203 A1**
(43) Date of publication of application: **25.04.2012**
(21) Application number: 10789488.3
(22) Date of filing: 15.06.2010
(51) Int. Cl.: H04N 5/76, H04N 5/765, H04N 5/91

(54) **ELECTRONIC DEVICE AND CAMERA**

(30) Priority: 16.06.2009 JP 2009143254; 25.02.2010 JP 2010040381
(71) Applicant: Nikon Corporation, Tokyo 100-8331 (JP)
(72) Inventor: KUROIWA, Toshihisa, Tokyo 100-8331 (JP); UWAI, Hiroki, Tokyo 100-8331 (JP)
(74) Representative: Scheffler, Marco
(86) International application number: PCT/JP2010/060117
(87) International publication number: WO 2010/147113

(57) **Abstract**

An electronic device is provided with: a setting unit which sets, as an image data item to be printed, at least one image data item from among a plurality of image data items contained in a first image file; an image file generation unit which generates second image files for image data items to be printed of the image data items to be printed set at the setting unit; and an image recording unit which records the second image files generated by the image file generation unit to a storage medium.

## Description

The disclosures of the following priority applications are herein incorporated by reference: Japanese Patent Application No. 2009-143254 filed June 16, 2009 and Japanese Patent Application No. 2010-040381 filed February 25, 2010

The present invention relates to an electronic device and a camera.

There are image data recording devices known in the related art that record a plurality of sets of image data, obtained through a single shooting operation, into a single image file (for example, Japanese Laid Open Patent Publication No. H11-266420).

However, the images in an image file recorded by such an image data recording device in the related art cannot be individually printed on a printer that is not capable of handling an image file containing a plurality of images.

According to the first aspect of the present invention, the electronic device comprises: a setting unit that sets at least one set of image data among a plurality of sets of image data in a first image file containing the plurality of sets of image data as print target image data; an image file creation unit that creates a second image file corresponding to each set of print target image data having been set by the setting unit; and an image recording unit that records the second image file, having been created by the image file creation unit, into a storage medium.

According to the second aspect of the present invention, in the electronic device of the first aspect, it is preferred that the electronic device further comprises a print information recording unit that generates print information for the print target image data having been set by the setting unit and records the print information into the storage medium.

According to the third aspect of the present invention, in the electronic device of the first or second aspect, it is preferred that the electronic device further comprises a decision-making unit that makes a decision as to whether or not image data having been set as a print target by the setting unit is included in the first image file, wherein: the image file creation unit creates the second image file if the decision-making unit determines that the image data having been set as the print target is image data included in the first image file but does not create the second image file if the decision-making unit determines that the image data having been set as the print target is not image data included in the first image file.

According to the fourth aspect of the present invention, in the electronic device any one of the first through third aspect, it is preferred that the electronic device further comprises a correlating unit that correlates image data contained in the second image file having been created by the image file creation unit to the first image file from which the print target image data originate.

According to the fifth aspect of the present invention, in the electronic device of the fourth aspect, it is preferred that the correlating unit correlates the image data in the second image file to the first image file by matching part of a file name assigned to the second image file with part of a file name of the first image file from which the print target image data originate.

According to the sixth aspect of the present invention, in the electronic device of the fifth aspect, it is preferred that the correlating unit correlates the image data in the second image file to the first image file by matching a number included in the file name assigned to the second image file with a number included in the file name of the first image file from which the print target image data originate.

According to the seventh aspect of the present invention, in the electronic device any of the first through the sixth aspect, it is preferred that if the second image file is already recorded in the storage medium and the recorded second image file has been created based upon the same first image file as the first image file from which the second image file to be newly recorded is sourced, the image recording unit records the new second image file by writing the new second image file over the previously recorded second image file.

According to the eighth aspect of the present invention, in the electronic device of the seventh aspect, it is preferred that before recording the new second image file by writing the new second image file over the previously recorded second image file, the image recording unit issues an inquiry to the user asking whether or not to proceed with an overwrite and the image recording unit proceeds with the overwrite if the user permits the overwrite, but the image recording unit records the new second image file under a file name different from the file name of the previously recorded second image file if the user does not permit the overwrite.

According to the ninth aspect of the present invention, in the electronic device any one of the first through the eighth aspect, it is preferred that when the image file creation unit creates the second image file based upon image data in the first image file, the image file creation unit records information enabling identification of the image data used to create the second image data as part of additional information for the first image file and as part of additional information for the second image file, if the additional information in the first image file does not already include information enabling identification of the image data used to create the second image file.

According to the tenth aspect of the present invention, in the electronic device any one of the first through the ninth aspect, it is preferred that the electronic device further comprises a message display unit that brings up on display at a display device a message indicating insufficient memory space if memory space available in the storage medium is not large enough to allow the second image file to be recorded therein.

According to the eleventh aspect of the present invention, in the electronic device of the tenth aspect, it is preferred that the message display unit brings up on display a message including information indicating an image file that can be transferred to another storage medium in order to increase available memory space in the storage medium.

According to the twelfth aspect of the present invention, in the electronic device any of the first through the ninth aspect, it is preferred that the electronic device further comprises: an internal memory where data are recorded; and an image transfer unit that transfers an image file among image files recorded in the storage medium into the internal memory if the storage medium does not have sufficient memory space to allow the second image file to be recorded therein.

According to the thirteenth aspect of the present invention, in the electronic device of the twelfth aspect, it is preferred that the image transfer unit identifies an image file to be transferred in order to secure sufficient memory space to allow the second image file to be recorded among the image files recorded in the storage medium, based upon the memory space currently available in the storage medium, a data size of the second image file to be recorded and data sizes of the image files recorded in the storage medium, and transfers the identified image file to the internal memory.

According to the fourteenth aspect of the present invention, in the electronic device any one of the first through the thirteenth aspect, it is preferred that the setting unit brings up an at-a-glance display of image files recorded in the storage medium and brings up an at-a-glance display of the plurality of sets of image data included in the first image file selected by the user from the image files in the at-a-glance display, so as to allow the user to specify the print target image data.

According to the fifteenth aspect of the present invention, in the electronic device of the fourteenth aspect, it is preferred that if the first image file includes image data already set as print target image data, the setting unit includes additional information indicating that the image data have already been selected as print target image data in the at-a-glance display of the plurality of sets of image data in the first image file displayed.

According to the sixteenth aspect of the present invention, in the electronic device of the fifteenth aspect, it is preferred that the setting unit provides the additional information indicating that the image data have already been set as print target image data through at least one of methods whereby; (1) an image expressed with the image data already set as print target image data is displayed in a different color, (2) a character string indicating that the image data have already been set as print target image data is displayed and (3) an icon indicating that the image data have already been set as print target image data is displayed.

According to the seventeenth aspect of the present invention, the camera comprises: a setting unit that sets at least one set of image data among a plurality of sets of image data in a first image file containing the plurality of sets of image data as print target image data; an image file creation unit that creates a second image file corresponding to each set of print target image data having been set by the setting unit; an image file recording unit that records the second image file having been created by the image file creation unit, into a storage medium; and a transmission unit that transmits the second image file having been created by the image file creation unit to a printing device.

According to the eighteenth aspect of the present invention, in the camera of the seventeenth aspect, it is preferred that the camera further comprises a decision-making unit that makes a decision as to whether or not image data having been set as a print target by the setting unit is included in the first image file, wherein: the image file creation unit creates the second image file if the decision-making unit determines that the image data having been set as the print target is image data included in the first image file but does not create the second image file if the decision-making unit determines that the image data having been set as the print target is not image data included in the first image file.

According to the nineteenth aspect of the present invention, in the camera of the seventeenth or the eighteenth aspect, it is preferred that the camera further comprises a correlating unit that correlates image data contained in the second image file having been created by the image file creation unit to the first image file from which the print target image data originate.

According to the twentieth aspect of the present invention, in the camera of the nineteenth aspect, it is preferred that the correlating unit correlates the image data in the second image file to the first image file by matching part of a file name assigned to the second image file with part of a file name of the first image file from which the print target image data originate.

According to the twenty-first aspect of the present invention, in the camera of the fifth aspect, it is preferred that the correlating unit correlates the image data in the second image file to the first image file by matching a number included in the file name assigned to the second image file with a number included in the file name of the first image file from which the print target image data originate.

According to the twenty-second aspect of the present invention, in the camera any one of the seventeenth through the twenty-first aspect, it is preferred that if the second image file is already recorded in the storage medium and the recorded second image file has been created based upon the same first image file as the first image file from which the second image file to be newly recorded is sourced, the image recording unit records the new second image file by writing the new second image file over the previously recorded second image file.

According to the twenty-third aspect of the present invention, in the camera of the twenty-second aspect, it is preferred that before recording the new second image file by writing the new second image file over the previously recorded second image file, the image recording unit issues an inquiry to the user asking whether or not to proceed with an overwrite and the image recording unit proceeds with the overwrite if the user permits the overwrite, but the image recording unit records the new second image file under a file name different from the file name of the previously recorded second image file if the user does not permit the overwrite.

According to the twenty-fourth aspect of the present invention, in the camera any one of the seventeenth through the twenty-third aspect, it is preferred that the setting unit brings up an at-a-glance display of image files recorded in the storage medium and brings up an at-a-glance display of the plurality of sets of image data included in the first image file selected by the user from the image files in the at-a-glance display, so as to allow the user to specify the print target image data.

According to the twenty-fifth aspect of the present invention, in the camera of the twenty-fourth aspect, it is preferred that if the first image file includes image data already set as print target image data, the setting unit includes additional information indicating that the image data have already been selected as print target image data in the at-a-glance display of the plurality of sets of image data in the first image file displayed.

According to the twenty-sixth aspect of the present invention, in the camera of the twenty-fifth aspect, it is preferred that the setting unit provides the additional information indicating that the image data have already been set as print target image data through at least one of methods whereby; (1) an image expressed with the image data already set as print target image data is displayed in a different color, (2) a character string indicating that the image data have already been set as print target image data is displayed and (3) an icon indicating that the image data have already been set as print target image data is displayed.

According to the twenty-seventh aspect of the present invention, the camera comprises: an image memory where image data are temporarily recorded; a setting unit that sets at least one set of image data among a plurality of sets of image data in a first image file containing the plurality of sets of image data, as print target image data; an image file creation unit that creates a second image file corresponding to each set of print target image data having been set by the setting unit and records the second image file into the image memory for temporary storage; and a transmission unit that transmits the second image file having been created by the image file creation unit to a printing device.

According to the twenty-eighth aspect of the present invention, the print target image file creation method comprises: making a decision as to whether or not a single image file having been specified contains a plurality of sets of image data; identifying a single set of print target image data among the plurality of sets of image data upon deciding that the specified image file contains a plurality of sets of image data; creating a new image file containing the single set of image data having been identified; and recording the image file having been newly created into a recording medium.

### BRIEF DESCRIPTION OF THE DRAWINGS

Fig. 1 shows a block diagram showing the structure adopted in an embodiment of a digital still camera (DSC).
Fig. 2 shows a schematic illustration of data structures that may be assumed in an MP file.
Fig. 3 shows a first diagram illustrating how image files may be recorded in the memory card 110a.
Fig. 4 shows a specific example of an image at-a-glance screen.
Fig. 5 shows a specific example of DPOF (registered trademark) information.
Fig. 6 shows a second diagram illustrating how image files may be recorded in the memory card 110a.
Fig. 7 shows a flowchart of print instruction processing executed in compliance with DPOF (registered trademark).
Fig. 8 shows a specific example showing how a digital camera and a printer may be connected with each other.
Fig. 9 shows a flowchart of print instruction processing executed in compliance with PictBridge (registered trademark).
Fig. 10 shows a schematic illustration showing how image files may be correlated to one another based upon file numbers.
Fig. 11 shows a specific example of images displayed in a separate window.
Fig. 12 shows Specific examples for displaying an image selected for printing in a distinguishable manner.

### DESCRIPTION OF PREFERRED EMBODIMENTS

### - First Embodiment -

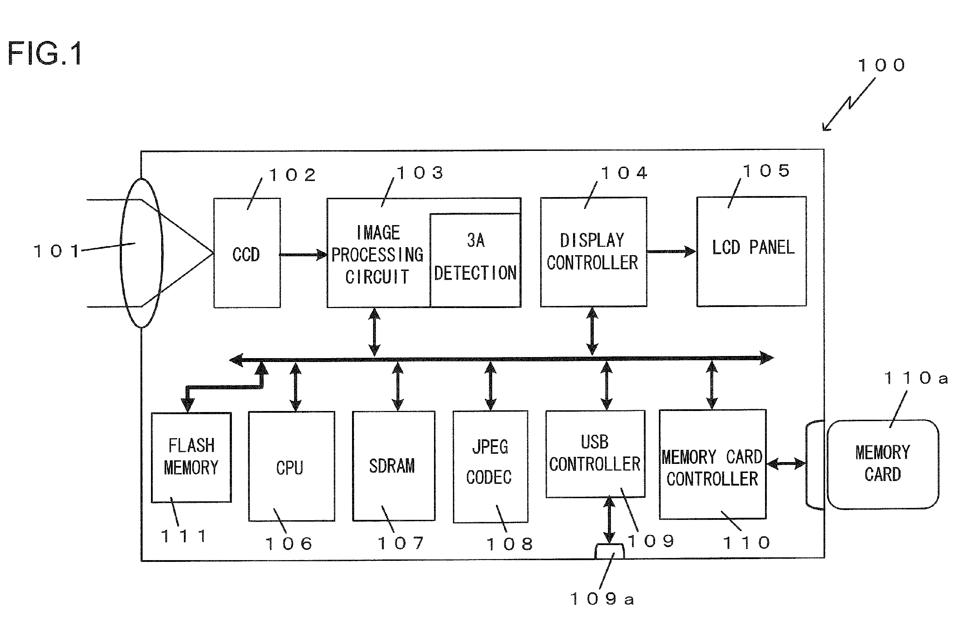

FIG 1 is a block diagram showing a structure that may be adopted in a digital still camera (DSC) achieved in the first embodiment. A digital still camera (hereafter referred to as a "digital camera") 100 comprises a lens 101, a CCD 102, an image processing circuit 103, a display controller 104, an LCD panel 105, a CPU 106, an SDRAM 107, a JPEG codec 108, a USB controller 109, a memory card controller 110 and a flash memory 111.

The CPU 106 is a main controller that executes overall control for the digital camera 100 by executing photographing processing, image reproduction processing, image data transfer processing and the like.

The photographing processing executed in the digital camera 100 is first described. An optical image of a subject input through the lens 101 undergoes photoelectric conversion at the CCD 102 functioning as an image sensor, and the photoelectric conversion results are read out from the CCD 102. The output from the CCD 102 is converted to digital image data at an AFE (analog front end) (not shown) and the digital image data are then input to the image processing circuit 103. The image processing circuit 103 executes various types of image processing on the digital image data input thereto, and then records the image data having undergone the image processing into the SDRAM 107. The image processing circuit 103 also executes the "3A (AE, AF and AWB)" operations and the relevant control during a shooting operation.

It is to be noted that the SDRAM 107, which is a built-in volatile memory, is used as a buffer memory where image data are temporarily recorded and as a work memory where a program is opened and variables used in the program are stored when the CPU 106 executes the program. In addition, the digital camera 100 is further equipped with a nonvolatile internal memory in the form of the flash memory 111.

The JPEG codec 108 reads out image data recorded in the SDRAM 107, compresses the image data in the JPEG format and records the compressed image data back into the SDRAM 107. The CPU 106 reads out the image data (JPEG data) having been JPEG compressed from the SDRAM 107 and creates an image file (JPEG file) by appending various types of additional information (metadata) to the JPEG data. The CPU 106 transfers the JPEG file thus created to the memory card controller 110, which then records the JPEG file into a memory card 110a loaded in a memory card slot. Once the JPEG file is recorded, the photographing processing is completed.

It is to be noted that the LCD panel 105, mounted on the rear side of the camera, functions as an LCD viewfinder during a shooting operation, and that image data having undergone the image processing at the image processing circuit 103 are brought up on display at the LCD panel 105 with predetermined frame intervals. The photographer is thus able to compose the optimal image by viewing the display at the LCD panel 105.

Next, image data reproduction processing executed in the digital camera 100 is described. The CPU 106 reads out a JPEG file from the memory card 110a by controlling the memory card controller 110. The CPU 106 reads out the JPEG data in the JPEG file thus read out, decompresses the JPEG data and outputs the decompressed data to the image processing circuit 103. The image processing circuit 103 generates display image data by adjusting the resolution of the image to match the display resolution of the LCD panel 105 through resolution conversion executed on the decompressed data input thereto, and records the display image data into the SDRAM 107.

The display controller 104 reads out display image data from the SDRAM 107 and displays the display image data thus read out at the LCD panel 105.

The digital camera 100 in the embodiment is capable of creating an image file with a plurality of sets of JPEG data recorded therein, as well as the JPEG file created through the standard photographing processing described above, i.e., an image file containing a single set of JPEG data recorded therein. When a plurality of sets of JPEG data are generated in a batch through a single photographing event, such as a continuous shooting operation, a panorama shooting session or an interval shooting operation, the CPU 106 stores the plurality of sets of JPEG data having been generated in a batch into a single image file. In other words, the CPU 106 creates an image file with the plurality of sets of JPEG data recorded therein.

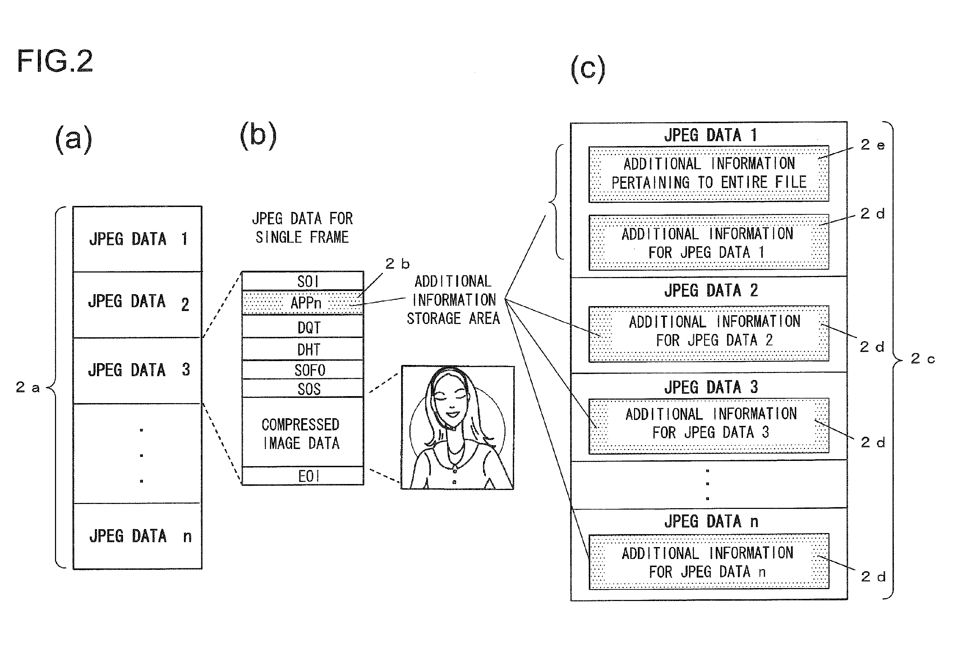

In the description of the embodiment, an image file with a single set of main image data recorded therein will be referred to as an SP (single-picture) file, whereas an image file with a plurality of sets of main image data recorded therein will be referred to as an MP (multi-picture) file. It is to be noted that the SP file may contain thumbnail data and display image data corresponding to the main image data, in addition to the single set of main image data. The following description of the first through fourth embodiments is provided by assuming that main image data are JPEG data. The SP file may be formatted in compliance with, for instance, the Exif standard (exchangeable image file format for digital still cameras) of the known art. The MP file may be formatted as shown in FIG 2.

FIG 2 schematically illustrates data structures that may be adopted in an MP file. The data in an MP file may be formatted so that a plurality of sets of JPEG data 1 to n are recorded into a single image file 2a, as shown in FIG 2(a). Each set of JPEG data in the image file assumes a standard data format shown in FIG 2(b), with additional information for the particular set of JPEG data, such image ID information used to identify the image, recorded in APPn 2b.

The data in an MP file may instead be formatted as shown in FIG 2(c). In the example presented in FIG 2(c), too, a plurality of sets of JPEG data 1 to n are recorded in a single image file 2c. In addition, each set of JPEG data includes additional information 2d corresponding to the particular set of JPEG data. Additional information 2e pertaining to the entire image file 2c is recorded as part of the first JPEG data 1 recorded at the beginning of the image file 2c.

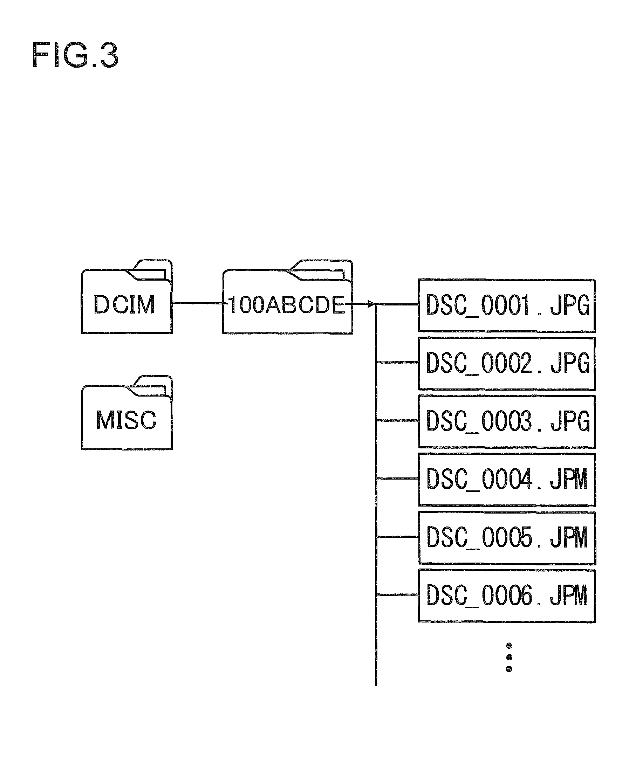

FIG 3 shows how image files may be recorded in the memory card 110a. It is to be noted that the memory card 110a is normally formatted with the FAT file system and the image files are recorded as FAT system files. In the example presented in FIG 3, the image files are recorded with the DCF (design rule for camera file system) standard. Namely, image files are each recorded with a file name appended thereto in a "100ABCDE" directory within a "DCIM" directory. It is to be noted that a file with an extension ".JPG" in FIG 3 is an SP file, whereas a file with an extension ".JPM" in FIG 3 is an MP file.

In the example presented in FIG 3, three SP files "DSC_0001.JPG", "DSC_0002.JPG" and "DSC_0003.JPG" and three MP files "DSC_0004.JPM", "DSC_0005.JPM" and "DSC_0006.JPM" are recorded in the "100 ABCDE" directory.

The embodiment allows the user to issue a print instruction by designating a set of JPEG data, which may be stored in an MP file or an SP file recorded in the memory card 110a, as a print target. It is to be noted that a print target image may be selected and a print instruction may be issued in conjunction with the selected target image in the digital camera 100 by adopting the DPOF (digital print order format) (registered trademark) method of the known art as the print instruction method. The DPOF (registered trademark) is a definitive format that may be adopted in conjunction with print information (DPOF (registered trademark) information) used to enable automated printing on a printer or the like.

Once the user specifies a print target image, the desired quantity of prints (number of sheets of print) and the like in the digital camera 100 and records DPOF (registered trademark) information indicating the print target image, the desired print quantity and the like together with the image file in a memory card 110a, the user is able to issue a print instruction in compliance with the DPOF (registered trademark). The user inserts the memory card 110a into a memory card slot of the printer to be used to print out the image. The printer reads out the DPOF (registered trademark) information from the memory card 110a loaded in the memory card slot and prints the image based upon the DPOF (registered trademark) information. It is to be noted that since the print processing executed at the printer by using the DPOF (registered trademark) information is of the known art, its explanation is not provided.

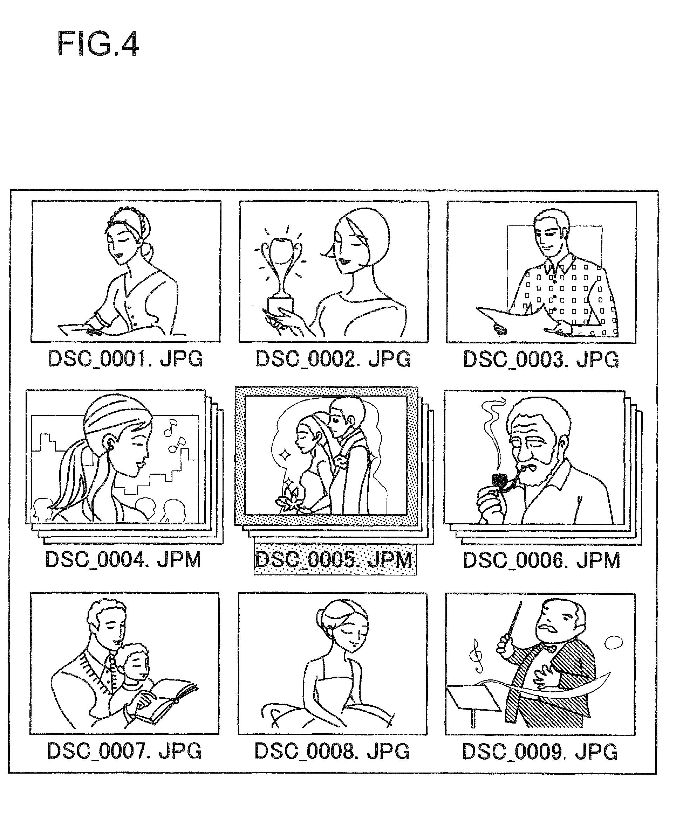

The user, wishing to issue a print instruction in compliance with the DPOF (registered trademark), needs to first issue an image selection start instruction on the LCD panel 105 so as to start the selection of a print target image. In response to the image selection start instruction issued by the user, the CPU 106 executes the reproduction processing mentioned earlier so as to bring up a print instruction screen with an at-a-glance display of the images in the SP files and the images in the MP files recorded in the memory card 110a. The print instruction screen brought up on display at the LCD panel 105 may display the images stored in the SP files (extension: JPG) and the images expressed with JPEG data stored in the MP files (extension: JPM) as shown in FIG 4.

In the display example for the print instruction screen presented in FIG 4, the image expressed with a single set of JPEG data stored in each SP file is displayed for the particular SP file. "DSC_0001.JPG", "DSC 0002.JPG", "DSC 0003.JPG", "DSC 0007.JPG", "DSC_0008.JPG", and "DSC_0009.JPG" in FIG 4 each represents an example of an image expressed with a single set of JPEG data stored in an SP file. The user selects an image in one of the SP files in the at-a-glance display with a cursor by operating a cross-key included in an operation member (not shown), and then presses an OK button (not shown) so as to specify the selected image as a print target.

An MP file, on the other hand, includes a plurality of sets of JPEG data stored therein and thus, the plurality of images need to be displayed in correspondence to the single MP file. In the embodiment, the images expressed with the plurality of sets of JPEG data stored in each MP file, e.g., "DSC_0004.JPM", "DSC_0005. JPM " or "DSC 0006.JPM" in FIG 4, are displayed as a stack of images so as to indicate that a plurality of sets of JPEG data are stored in the file.

The user is able to select a specific MP file with the cursor moved to the corresponding batch of MP file images each displayed as a stack of images by operating the cross-key included in the operation member (not shown). In this situation, the image displayed at the top of the selected image stack is selected. In addition, the user is able to switch images so as to display a different image at the top of the selected stack of images on display by operating the operation member. Namely, the user is able to display a different image at the top of the stack of images on display by operating the operation member so as to select an alternative image. In this case, too, the user is able to designate the selected image as a print target image by pressing the OK button (not shown).

In addition, although not shown in FIG 4, the print instruction screen includes a print quantity (number of sheets of print) field displayed in correspondence to each of the images in the at-a-glance display, so as to allow the user to indicate, via the operation member, in the print quantity (number of sheets of print) field the number of print copies he wishes to obtain in correspondence to each image having been specified as a print target.

Once the user designates a given image as a print target and selects a specific print quantity (number of sheets of print), the CPU 106 executes processing for printing the designated image in compliance with the DPOF (registered trademark). More specifically, the print instruction processing executed in compliance with the DPOF (registered trademark) requires creation of standardized DPOF (registered trademark) information. While images in SP files can be printed based upon such DPOF (registered trademark) information, images in MP files cannot be printed based upon DPOF (registered trademark) information.

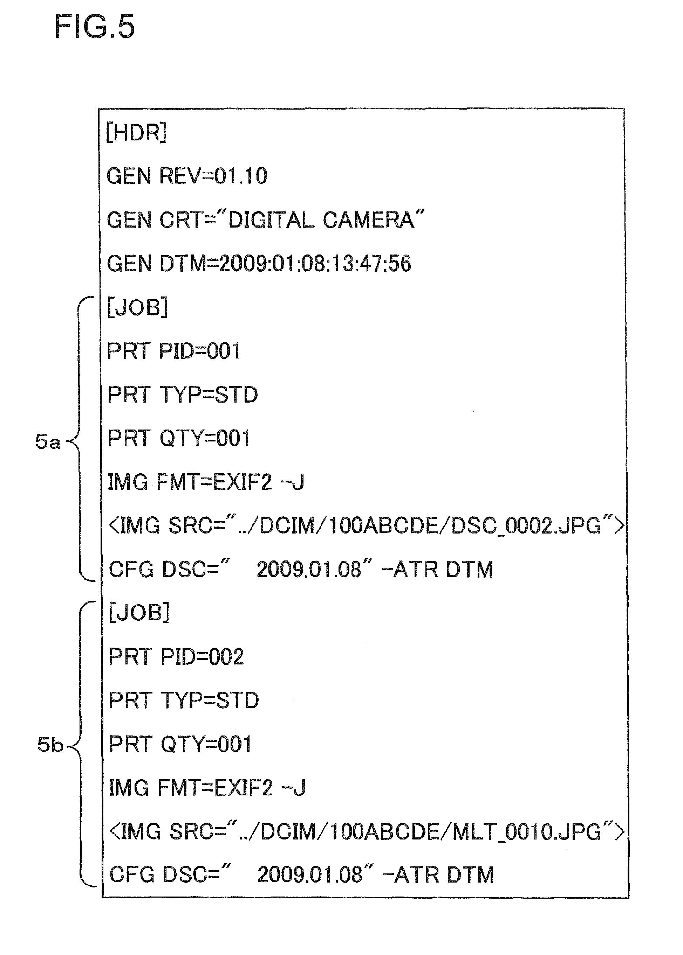

Accordingly, if the image having been designated as a print target by the user is an image expressed with JPEG data recorded in an SP file, the CPU 106 generates DPOF (registered trademark) information such as that shown in FIG 5 by designating the SP file corresponding to the image having been specified by the user as a print target. The DPOF (registered trademark) information in the example presented in FIG 5, generated for the SP file assigned with the file name DSC 0002.JPG in FIG 4 selected as print target for a single-copy print, includes additional JOB information 5a that enables printing of the SP file.

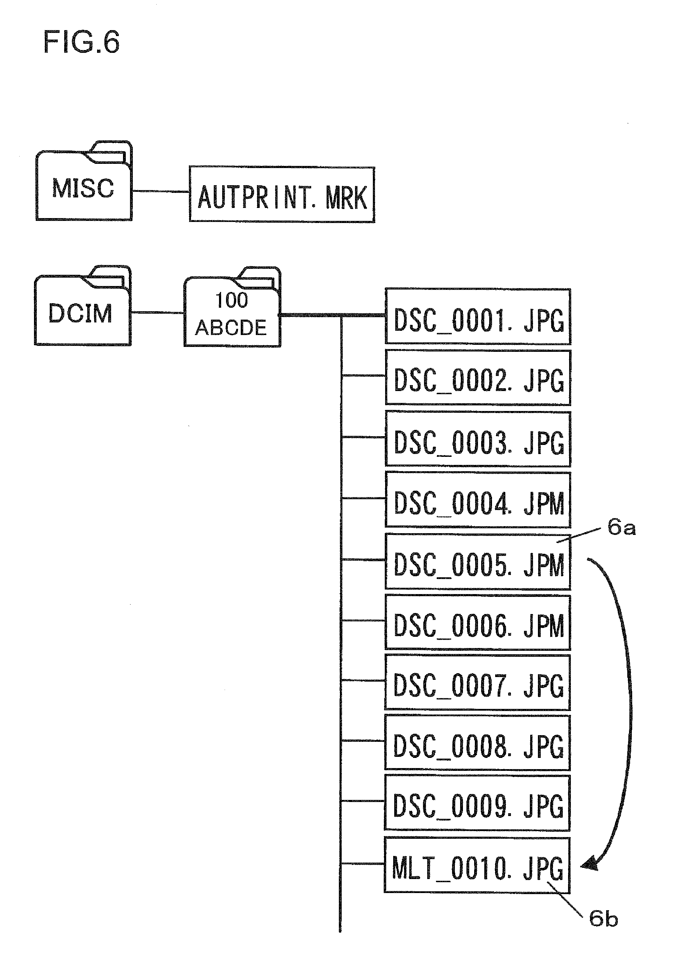

It is to be noted that the DPOF (registered trademark) information is recorded into the memory card 110a in a data file assigned with a file name AUTPRINT.MRK. The AUTPRINT.MRK file may be recorded within a folder entitled "MISC" in the memory card 110a, as shown in FIG 6.

If, on the other hand, the image, having been specified by the user is an image expressed with JPEG data recorded in an MP file, the CPU 106 extracts a single set of JPEG data in the MP file corresponding to the specified image and creates an SP file having recorded therein the extracted JPEG data. For instance, assuming that an image expressed with a given set of JPEG data among the sets of JPEG data recorded in the MP file assigned with the file name DSC_0005.JPM in FIG 4 has been specified, the CPU 106 creates an SP file (MLT_0010.JPG) 6b by extracting the set of JPEG data having been specified from the MP file (DSC_0005.JPM) 6a, as shown in FIG 6. The CPU 106 then appends, to the DPOF (registered trademark) information, JOB information 5b needed to print the SP file (MLT_ 0010.JPG) having been created.

As described above, the JOB information for the specified image can be appended to the DPOF (registered trademark) information regardless of whether the print target image having been specified by the user is contained in an SP file or in an MP file. As a result, the user is able to issue a print instruction for an image in an MP file just as easily as for an image in an SP file in a camera of the related art, without having to perform any extra operation.

In addition, since the first three letters "MLT" in the file name assigned to an SP file created for an image extracted from an MP file are different from the first three letters "DSC" in the file name assigned to a regular SP file containing an image having been recorded through a photographing operation, the MP file-sourced SP file can be distinguished from standard SP files simply by checking its file name. Furthermore, the newly created MP file-sourced SP file may include additional information indicating the image ID of the generation-source JPEG data so as to enable identification of the source MP file and identification of the specific JPEG data extracted from the MP file to create the SP file.

Based upon the image ID of the JPEG data in the initial source MP file carried over for the JPEG data in the newly created SP file, the origin of the SP file, i.e., the identity of the source MP file and the identity of the specific set of JPEG data in the particular MP file extracted to create the SP file, can be ascertained with ease. However, a set of JPEG data may not always be assigned with an image ID. Accordingly, when creating an SP file based upon JPEG data with no image ID, the CPU 106 should assign a new image ID to the JPEG data, record the image ID as additional information in the newly created SP file, and record the same image ID as additional information for the particular JPEG data in the source MP file from which the JPEG data have been extracted. An image unique ID in compliance with the Exif standard may be assigned as the image ID, or an image ID may be assigned by using the image ID information recorded in a format unique to the manufacturer.

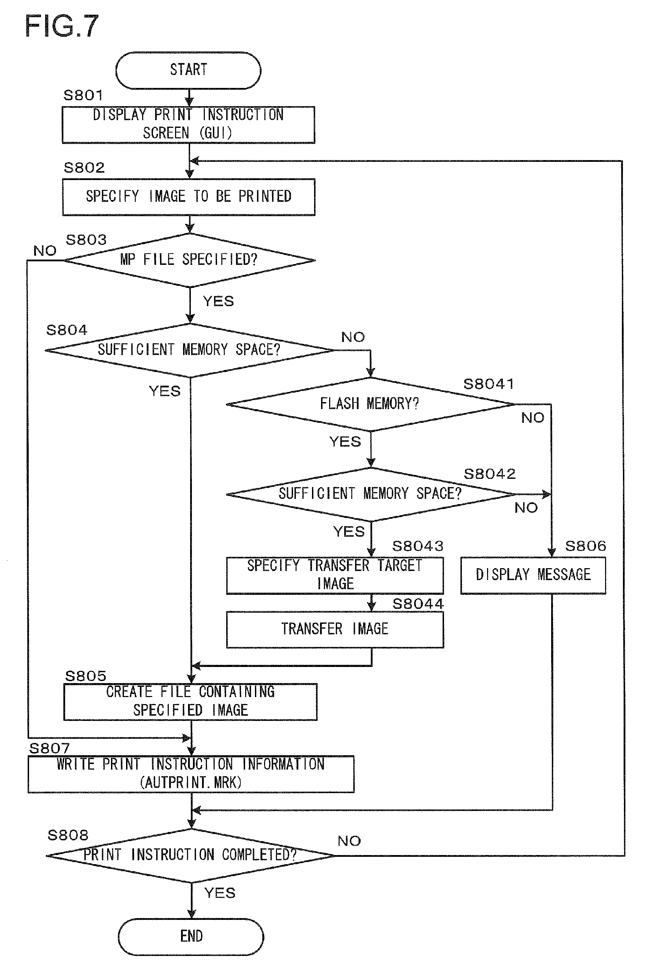

The following is a description of the print instruction processing executed in the embodiment in compliance with the DPOF (registered trademark), given in reference to the flowchart in FIG 7. The processing in FIG 7 is executed by the CPU 106 as a program that is started up in response to a print instruction processing start instruction issued by the user. It is to be noted that the program based upon which the processing in the flowchart presented in FIG 7 is executed may be recorded in, for instance, the flash memory 111.

In step S801, the CPU 106 brings up on display at the LCD panel 105 a print instruction screen such as that shown in FIG 4. Then the operation proceeds to step S802, in which the CPU 106 specifies a print target image based upon an image selection operation performed by the user via the print instruction screen, and subsequently, the operation proceeds to step S803. In step S803, the CPU 106 identifies the image file containing the image having been specified in step S802 and makes a decision as to whether or not the identified image file is an MP file.

If a negative decision is made in step S803, i.e., if the identified image file is an SP file, the operation proceeds to step S807 in which the CPU 106 adds the JOB information to be used to print the print target SP file to the DPOF (registered trademark) information. Namely, it writes the JOB information (print instruction information) needed to print the identified SP file into the AUTPRINT.MRK file in the memory card 110a. It is to be noted that if an AUTPRINT.MRK file does not exist in the "MISC" folder in the memory card 110a, the CPU 106 will first create an AUTPRINT.MRK file in the "MISC" folder before writing the JOB information into the AUTPRINT.MRK file. Subsequently, the operation proceeds to step S808 to be described in detail later.

If, on the other hand, an affirmative decision is made in step S803, i.e., if the identified image file is an MP file, the operation proceeds to step S804. In step S804, the CPU 106 estimates the data size of an SP file to be created by extracting the image having been specified by the user from the MP file and makes a decision based upon the estimated data size and the available memory space in the memory card 110a as to whether or not there is enough memory space available in the memory card 110a to allow the SP file containing the specified image to be recorded.

It is to be noted that the data size of each set of JPEG data recorded in the MP file is indicated in the additional information 2e pertaining to the entire MP file shown in FIG 2(c). Accordingly, the CPU 106 is able to estimate the data size of the SP file based upon the data size of the JPEG data indicated in the additional information, the data size of any additional information to be appended to the JPEG data and the like.

If an affirmative decision is made in step S804, i.e., if there is sufficient memory space available in the memory card 110a, the operation proceeds to step S805, in which the CPU 106 extracts the JPEG data expressing the image having been specified by the user from the MP file identified in step S802, creates an SP file having recorded therein the extracted JPEG data and records the SP file thus created into the memory card 110a. The operation then proceeds to step S807 to be described in detail later.

If, on the other hand, a negative decision is made in step S804, i.e., if the available memory space in the memory card 110a is insufficient, the SP file to be newly created cannot be recorded into the memory card 110a and accordingly, the following processing is executed. First, in step S8041, the CPU 106 makes a decision as to whether or not the digital camera 100 is equipped with an internal memory constituted with a flash memory. It is to be noted that the digital camera 100 in the embodiment is equipped with the flash memory 111, and thus, an affirmative decision will be made in step S8041. However, if the processing is executed in a digital camera that is not equipped with a built-in memory constituted with a flash memory 111, a negative decision will be made in step S8041.

If sufficient memory space is not available in the memory card 110a and the digital camera 100 is not equipped with a built-in flash memory 111, a negative decision is made in step S8041. In this situation, there is no space to record the new SP file to be created with the JPEG data expressing the image having been specified by the user. Accordingly, the operation proceeds to step S806, in which the CPU 106 brings up a message display before the operation proceeds to step S808 to be described in detail later.

It is to be noted that the message display provided by the CPU 106 in step S806 includes a message indicating a specific image file among the existing image files already recorded in the memory card 110a, which may be deleted or transferred to a memory card other than the memory card 110a currently loaded in the memory card slot so as to create memory space large enough to accommodate the SP file to be newly created within the memory card 110a, in addition to a message indicating that the memory card 110a does not have sufficient memory space. The user is thus able to ascertain a specific image file that may be deleted or transferred into another memory card in order to print the image by securing sufficient memory space in the memory card 110a.

Accordingly, the CPU 106 estimates the data size of the SP file to be created by extracting the image specified by the user from the MP file and makes a decision based upon the estimated SP file data size, the currently available memory space in the memory card 110a and the data sizes of the existing image files in the memory card 110a as to a specific image file in the memory card 110a that may be deleted or transferred in order to create sufficient memory space where the SP file to be newly created can be recorded, and includes the decision-making results in the message display.

If, on the other hand, the digital camera 100 is equipped with a flash memory 111, an affirmative decision is made in step S8041. In this case, as long as there is sufficient space available in the flash memory 111, a memory space large enough to record the SP file to be newly created can be secured in the memory card 110a by transferring a single image file or a plurality of image files in the memory card 110a to the flash memory 111 even though the memory card 110a does not currently have sufficient memory space. Accordingly, the CPU 106 executes the following processing.

In step 8042, the CPU 106 identifies an image file, among the image files recorded in the memory card 110a, that may be transferred into the flash memory 111 so as to create memory space large enough to record the SP file to be newly created and makes a decision as to whether or not the flash memory 111 has memory space large enough to record the image file having been identified as a transfer candidate.

In this step, the CPU 106 estimates the data size of the SP file to be created by extracting the image specified by the user from the MP file and identifies at least one image file as a transfer candidate that may be transferred in order to secure memory space in the memory card 110a, which is large enough to accommodate the SP file to be newly created, based upon the estimated data size, the memory space currently available in the memory card 110a and the data sizes of the various image files recorded in the memory card 110a. It then makes a decision as to whether or not the available memory space in the flash memory 111 is large enough to accommodate the identified image file.

If a negative decision is made in step S8042, sufficient memory space cannot be secured in the memory card 110a by transferring the image file currently recorded in the memory card 110a to the flash memory 111 and accordingly, the operation proceeds to step S806 to bring up the message display. However, if an affirmative decision is made in step S8042, the operation proceeds to step S8043.

In step S8043, the CPU 106 designates the image file having been identified through the decision-making processing in step S8042 as an image file to be transferred into the flash memory 111, as a transfer target. Subsequently, the operation proceeds to step S8044, in which the CPU 106 transfers the image file having been designated as the transfer target to the flash memory 111 from the memory card 110a. The operation then proceeds to step S805, in which the CPU 106 extracts the JPEG data expressing the image having been specified by the user from the MP file identified in step S802, creates an SP file having recorded therein the extracted JPEG data and records the SP file into the memory card 110a. Subsequently, the operation proceeds to step S807.

In step S807, the CPU 106 adds JOB information to be used to print the SP file having been created in step S805, to the DPOF (registered trademark) information. In other words, it writes the JOB information (print instruction information), to be used to print the SP file having been created, in the AUTPRINT.MRK file in the memory card 110a. It is to be noted that, in this situation too, if an AUTPRINT.MRK file does not exist in the "MISC" folder in the memory card 110a, the CPU 106 will first create an AUTPRINT.MRK file in the "MISC" folder and then will write the JOB information into the AUTPRINT.MRK file. Subsequently, the operation proceeds to step S808.

In step S808, the CPU 106 makes a decision as to whether or not the print instruction by the user selecting a print target image via the print instruction screen, has been completed. The print instruction screen may include a "finish" button (not shown) and upon detecting that the user has operated the "finish" button via the operation member, the CPU 106 determines that the print instruction has been completed. If a negative decision is made in step S808, the operation returns to step S802 to repeatedly execute the processing. If, on the other hand, an affirmative decision is made in step S808, the processing ends.

The following advantages are achieved through the first embodiment described above.
(1) The CPU 106 creates an SP file containing a given image specified by the user among a plurality of images included in a single MP file recorded in the memory card 110a and records the SP file thus created into the memory card 110a. Through these measures, an image contained in an MP file can be printed even when the print instruction processing executed in compliance with the DPOF (registered trademark) does not support printing of images in MP files.
(2) The CPU 106 records the JOB information for the SP file newly created as a print target into the AUTPRINT.MRK file. The DPOF (registered trademark) information that enables printing of the newly created SP file can thus be created.
(3) The memory card 110a also holds standard SP files having been generated through photographing processing. If the user specifies an image in such a standard SP file, the CPU 106 designates the SP file itself directly as a print target. Thus, since the print instruction processing of the related art simply needs to be executed, the processing can be simplified whenever a print instruction for the image in a standard SP file is issued.
(4) The CPU 106 assigns an MP file-sourced SP file with a file name with the first three letters "MLT", distinguishable from the first three letters "DSC" in the file name assigned to each standard SP file recorded through photographing processing. As a result, the user is able to distinguish the MP file-sourced SP file from standard SP files simply by checking its file name.
(5) The CPU 106 records the image ID of the JPEG data used to create a new SP file as additional information for the newly created SP file. In addition, if an SP file is created based upon JPEG data with no image ID assigned thereto, it assigns a new image ID to the JPEG data, records the newly assigned image ID as additional information for the newly created SP file and also records the same image ID as additional information for the particular JPEG data in the source MP file from which the JPEG data have been extracted. Thus, the origin of the SP file, i.e., the identity of the source MP file and the identity of the JPEG data extracted from the source MP file to create the SP file, can be ascertained with ease.
(6) If the memory space available in the memory card 110a is not large enough to accommodate the SP file to be newly created, the CPU 106 brings up a message indicating that the memory space is not sufficient. The message thus alerts the user that a print instruction for the specified image cannot be issued due to insufficient memory space in the memory card 110a.
(7) Together with the message indicating insufficient memory space in the memory card 110a, the CPU 106 provides a message indicating a specific image file among the existing image files recorded in the memory card 110a, which may be deleted or transferred to a memory card other than the memory card 110a currently loaded in the memory card slot to create sufficient memory space for recording the SP file to be newly created. As a result, the user is able to ascertain which image file is to be deleted or transferred to another memory card to secure sufficient memory space in the memory card 110a in order to enable printing of the image.
(8) If the memory card 110a does not have sufficient memory space, the CPU 106 transfers an image file among those recorded in the memory card 110a into the flash memory 111. Through these measures, sufficient memory space is secured in the memory card 110a to enable the print instruction processing.
(9) The CPU 106 estimates the data size of the SP file to be created by extracting the image specified by the user from the MP file, identifies at least one image file to be transferred in order to secure sufficient memory space in the memory card 110a to record the newly created SP file, based upon the estimated data size, the memory space currently available in the memory card 110a and the data sizes of the various image files recorded in the memory card 110a, and transfers the identified image file to the flash memory 111. Thus, an image file to be transferred in order to secure sufficient memory space in the memory card 110a for recording the SP file to be newly created can be automatically identified and transferred.

### - Second Embodiment -

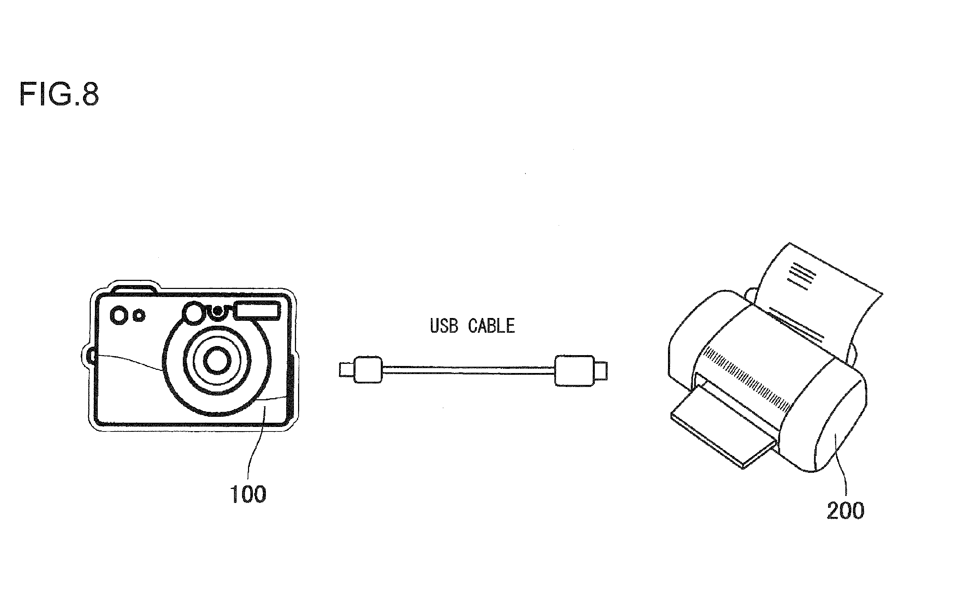

In the first embodiment described above, the print instruction processing is executed in compliance with the DPOF (registered trademark). As an alternative, print processing may be executed in compliance with the PictBridge (registered trademark) protocol of the known art. When executing print instruction processing in compliance with PictBridge (registered trademark), the user, having connected to the digital camera 100 with a printer 200 via a USB cable, as shown in FIG 8, selects a print target image at the digital camera 100. In response, a print job is executed and a print command and the print target image are transmitted to the printer. It is to be noted that in this situation, the digital camera 100 is connected via a USB port 109a with the printer 200 through a USB connection, which is controlled by a USB controller 109.

In reference to the second embodiment, the print instruction processing executed in compliance with PictBridge (registered trademark) is described. It is to be noted that while FIGS. 1 through 4 are also relevant to the second embodiment, the first embodiment has already been described in reference to the figures and thus, a repeated explanation is not provided.

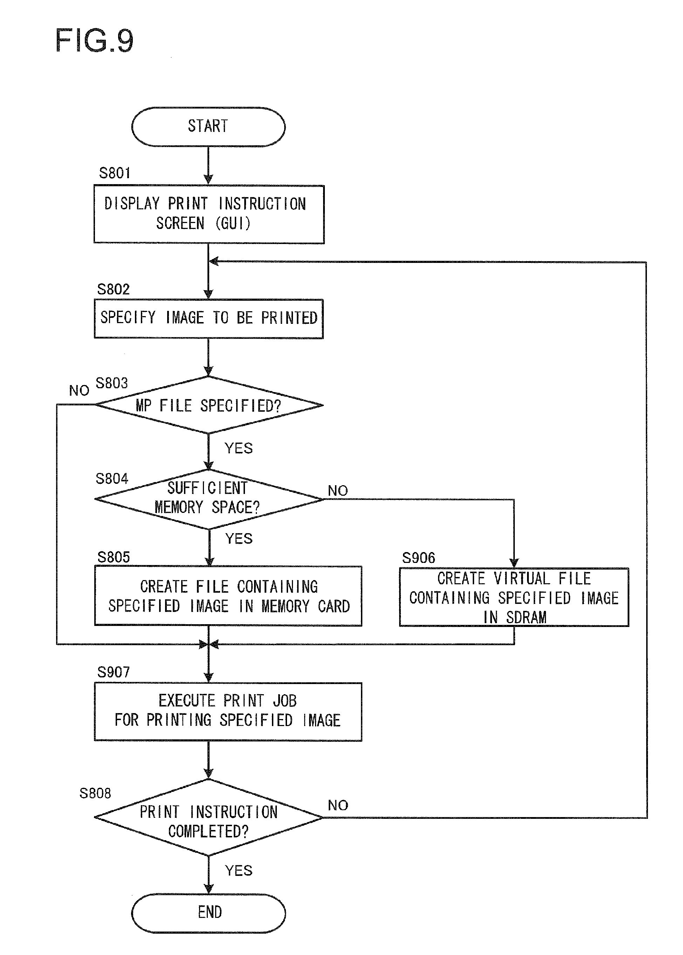

The following is a description of the print processing executed in the second embodiment in compliance with PictBridge (registered trademark), given in reference to the flowchart presented in FIG 9. The processing in FIG 9 is executed by the CPU 106 based upon a program started up in response to a print instruction processing start instruction issued by the user. It is to be noted that in FIG 9, the same step numbers are assigned to steps in which processing similar to that in the flowchart presented in FIG 7 is executed so as to preclude the necessity for a repeated explanation thereof, and that the following description focuses on processing different from that in FIG 7. It is to be noted also that the program based upon which the processing in the flowchart presented in FIG 9 is executed may be recorded in, for instance, the flash memory 111.

If an affirmative decision is made in step S804, i.e., if there is sufficient memory space available in the memory card 110a, the operation proceeds to step S805, in which the CPU 106 extracts the JPEG data expressing the image having been specified by the user from the MP file identified in step S802, creates an SP file having recorded therein the extracted JPEG data and records the SP file into the memory card 110a. The operation then proceeds to step S907 to be described in detail later.

If, on the other hand, a negative decision is made in step S804, i.e., if the memory card 110a does not have sufficient memory space, the operation proceeds to step S906. In step S906, the CPU 106 extracts the JPEG data expressing the image specified by the user from the MP file identified in step S802, creates an SP file having recorded therein the extracted JPEG data, and records the SP file into the SDRAM 107.

Namely, in PictBridge (registered trademark)-based print instruction processing, a print instruction can be issued directly to the printer 200 connected via a USB cable by bypassing the memory card 110a. This means that an SP file and a newly created SP file does not always need to be recorded into the memory card 110a, as long as it is temporarily recorded in the SDRAM 107 until execution of the print job is completed. Accordingly, in the second embodiment, if the space currently available in the memory card 110a is not large enough to accommodate the new SP file, it will be recorded into the SDRAM 107.

Subsequently, the operation proceeds to step S907 in which the CPU 106 executes the print job as explained earlier by transmitting a print command and the print target image file, i.e., either the SP file having been recorded into the memory card 110a in step S805 or the SP file having been recorded into the SDRAM 107 in step S906, to the printer 200. If the SP file transmitted by the CPU 106 at this time a file having been recorded into the SDRAM 107 in step S906, the CPU 106 deletes the SP file in the SDRAM 107 upon completing the transmission. The operation then proceeds to step S808.

Through the processing described above, the print job can be executed to print the image specified by the user even when sufficient memory space is not available in the memory card 110a. It is to be noted that the processing executed in the embodiment may be modified so as to invariably proceed to step S906 to record the newly created SP file into the SDRAM 107, regardless of whether or not sufficient memory space is available in the memory card 110a. However, since the SDRAM 107 is a volatile memory, the new SP file created as the print target will be lost if the print j job cannot be completed due to, for instance, depletion of the battery power in the digital camera 100 occurring while the print instruction processing is in progress. This means that the user will have to repeat the entire process, starting with the selection of the image, after restoring power to the digital camera 100.

In the embodiment, the newly created SP file is recorded into the memory card 110a as long as the memory card 110a has sufficient memory space. Thus, the print target SP file will be retained in the memory card 110 even if the battery power in the camera becomes depleted while the print instruction processing is in progress and the print job cannot be thus completed, so as to allow the user to print the desired image without having to go through the entire process from scratch starting with the image selection.

In addition to the advantages of the first embodiment described earlier, the following advantages are achieved through the second embodiment.
(1) The CPU 106 creates an SP file containing a given image specified by the user among a plurality of images included in a single MP file recorded in the memory card 110a, records the SP file thus created into the memory card 110a and transmits the SP file to the printer. Through these measures, an image contained in an MP file can be printed even when PictBridge (registered trademark)-based print instruction processing does not support printing of images in MP files.
(2) If the memory space currently available in the memory card 110a is not sufficient, the CPU 106 records the newly created SP file into the SDRAM 107 and transmits the SP file to the printer. Thus, since PictBridge (registered trademark)-based print instruction processing allows a print instruction to be directly issued to the printer 200 connected via a USB cable by bypassing the memory card 110a, a print instruction can be issued simply by recording the SP file into the SDRAM 107 whenever the memory space available in the memory card 110a is not sufficient.

### - Third Embodiment -

An SP file created in the first embodiment by extracting JPEG data from an MP file, as described earlier, includes the image ID, assigned to the generation source JPEG data, recorded therein as additional information so as to enable identification of the source MP file based upon which the new SP file has been created and identification of the specific JPEG data in the MP file having been extracted to create the SP file. In the third embodiment, the file name of the newly created SP file is correlated to the file name of the source MP file so as to allow the user to ascertain the specific MP file sourced to create the new SP file simply by checking their file names.

In the embodiment, image files are recorded, in principle, into the memory card 110a in compliance with the DCF (design rule for file system) standard and a file name is assigned to each image file in compliance with the DCF standard. It is to be noted that while the image file recording method in compliance with the DCF standard, which is of the known art, is not described in detail, the file name assignment rules that allow the file name of an SP file newly created in the embodiment to be correlated with the file name of the source MP file are described below.

As shown in FIG 3, image files are each recorded with a file name appended thereto in a "100ABCDE" directory within a "DCIM" directory, in compliance with the DCF standard. In the following description, the "DCIM" directory will be referred to as a "DCF image root directory" and the "100ABCDE" directory will be referred to as a "DCF directory". In addition, an image file recorded into the DCF directory must include a DCF file name made up with eight ASCII characters, and the last four characters in the DCF file name must be ASCII characters representing a decimal number between "0000" and "9999".

The last four characters indicating a decimal value between "0000" and "9999" is referred to as a "file number". While a file number that is different from all other file numbers is univocally appended to each image file under normal circumstances, one file number may be intentionally assigned to a plurality of image files to be grouped together. Such a group of image files sharing the same file number will be referred to as a "DCF object" in this description. In the embodiment, a DCF object is created by ensuring that the file names of a newly created SP file and the source MP file share the same file number so as to establish clear correlation between the two image files.

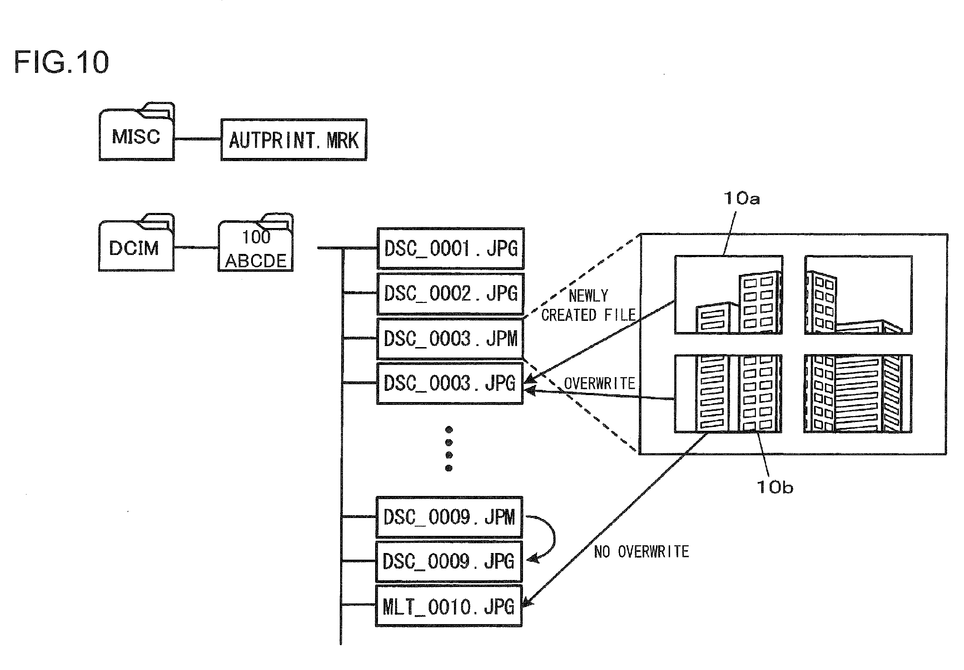

More specifically, a new SP file created by extracting an image 10a in an image file "DSC_0003.JPM" is assigned with a file name "DSC_0003.JPG", as shown in FIG 10. In other words, a DCF object is created by matching the file number (0003) in the file name of the new SP file with the file number (0003) in the file name of the source MP file. As a result, clear correlation between the newly created SP file and the source MP file is established.

FIG 10 also shows a new SP file "DSC_0009.JPG" created by extracting an image in an image file "DSC_0009.JPM". In this case, too, a DCF object is created to establish a clear correlation for the two image files by assigning a file name that includes the same file number (0009) to the new SP file as the file number (0009) in the file name of the source MP file.

The clear correlation established by assigning a file number matching that of the source MP file to the new SP file as described above enables the user to identify the source MP file based upon which the SP file has been created simply by checking the file names and thus manage image files with better ease.

It is to be noted that if there is an existing DCF object present in the DCF directory at the time of new SP file creation, i.e., if an SP file sharing the same file number with the source MP file has already been recorded, the CPU 106 assigns a file name that includes the same file number as that in the file name of the source MP file to the new SP file and then writes the newly created SP file over the previously recorded SP file.

As an alternative, if there is an existing DCF object present in the DCF directory at the time of new SP file creation, the CPU 106 may issue an inquiry to the user asking whether or not to overwrite the previously recorded SP file with the new SP file. In this situation, if the user issues an overwrite instruction, the CPU 106 writes the newly created SP file over the previously recorded SP file. If, on the other hand, the user indicates that the existing SP file is not to be overwritten, the CPU assigns a file name that includes a file number different from that of the source MP file, and records the new SP file under this file name.

For instance, another new SP file may be created by extracting an image 10b following the creation of "DSC_0003.JPG" containing the image 10a extracted from "DSC_0003.JPM", as shown in FIG 10. In such a case, the CPU 106 issues an inquiry for the user asking whether or not to write the new SP file assigned with the file name "DSC_0003.JPG" over the existing file. If the user issues an overwrite instruction, the file name "DSC_0003.JPG" is reassigned to the new SP file, which is then written over the previously recorded SP file "DSC_0003.JPG". If on the other hand, the user indicates that the existing SP file is not to be overwritten, the new SP file is assigned with a file name that does not include a file number matching that of the other image file, e.g., "MLT_0010.JPG" and the new SP file is recorded in the DCF directory under this file name. The new SP file may instead with the file name "DSC_0010.JPG"

Through these measures, the newly created SP file can be designated as a DCF object file correlated to the source MP file whenever the user requests an overwrite. If, on the other hand, the user does not wish to have the existing SP file overwritten with the new SP file, the newly created SP file is recorded separately without DCF object designation so as to enable printing of the new SP file while retaining the existing SP file as a DCF object file correlated to the source MP file.

It is to be noted that any print instruction information having been created for the previously recorded SP file, to be overwritten with a newly created SP file needs to be adjusted. The print instruction information adjustment may be achieved by modifying the relevant text in the existing print instruction information or by writing newly created print instruction information over the old print instruction information. In the latter case, the relevant part of the print instruction information may be searched based upon the file name assigned to the newly created SP file so as to identify the portion of the print instruction information pertaining to the older SP file and write new information over the identified portion. It is also to be noted that new SP file creation processing may be executed in a mode selected from a forced overwrite mode, a separate file number assignment mode and an inquiry mode.

The following advantages are achieved through the third embodiment described above.
(1) The CPU 106 assigns a file name, which includes the same file number as the file number in the file name of the source MP file, to the newly created SP file so as to establish a clear correlation between the two image files. As a result, the user is easily able to identify the source MP file based upon which the SP file has been created simply by checking the file names and thus manage image files more easily.
(2) If there is an existing DCF object present in the DCF directory at the time of new SP file creation, the CPU 106 assigns a file name that includes the same file number as that in the file name of the source MP file to the new SP file and then writes the newly created SP file over the previously recorded SP file. As a result, even when there is an established correlation between the source MP file and an older SP file, the newer SP file can be made to correlate with the source MP file.
(3) The CPU 106 issues an inquiry to the user asking whether or not to proceed with an overwrite before recording the newly created SP file by writing it over the previously recorded SP file. It proceeds with the overwrite only if the user gives permission and, if the user does not permit the overwrite, the new SP file is recorded under a file name containing a file number different from that of the previously recorded SP file. Through these measures, the newly created SP file can be designated as a DCF object file correlated to the source MP file whenever the user requests an overwrite. If, on the other hand, the user does not wish to have the existing SP file overwritten with the new SP file, the newly created SP file is recorded separately without DCF object designation so as to enable printing of the new SP file while retaining the existing SP file as a DCF object file correlated to the source MP file.

### - Fourth Embodiment -

On the print instruction screen provided by the CPU 106 in the first embodiment described earlier, an MP file is displayed as a stack of images corresponding to the plurality of sets of JPEG data stored in the MP file, as shown in FIG 4, so as to indicate that there are a plurality of sets of JPEG data stored in the single MP file. A further improvement in the user convenience is achieved in the fourth embodiment, in which a separate window is brought up on the LCD panel 105 and an at-a-glance list of the individual sets of image data in the selected MP file is provided in the window as the user selects a specific MP file on the print instruction screen in FIG 4 by moving the cursor to the particular MP file.

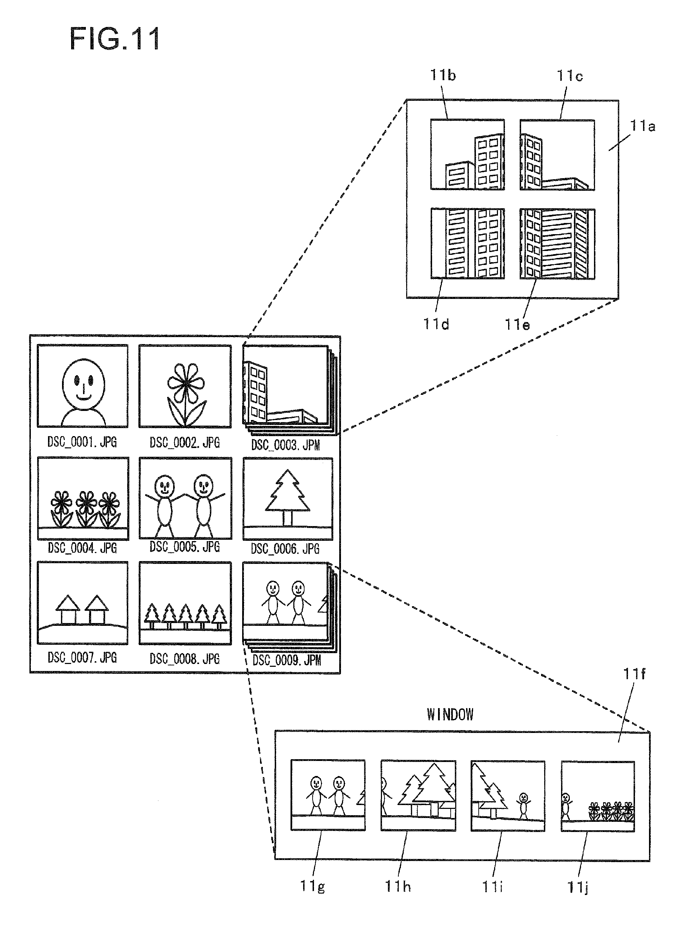

For instance, the user may move the cursor to "DSC_0003.JPM" on the print instruction screen, as shown in FIG 11. In this situation, the CPU 106 brings up a window 11a on the screen, so as to provide an at-a-glance display of sets of image data 11b to 11e contained in "DSC_0003.JPM". If the user moves the cursor to "DSC_0009.JPM" on the print instruction screen, on the other hand, the CPU 106 brings up a window 11f on the screen so as to provide an at-a-glance display of the sets of image data 11g to 11j contained in "DSC_0009.JPM".

The CPU 106 identifies image data selected from the window 11a by the user as a print target. Thus, the user is able to check the individual sets of image data contained in the MP file and select print target image data through a simple operation.

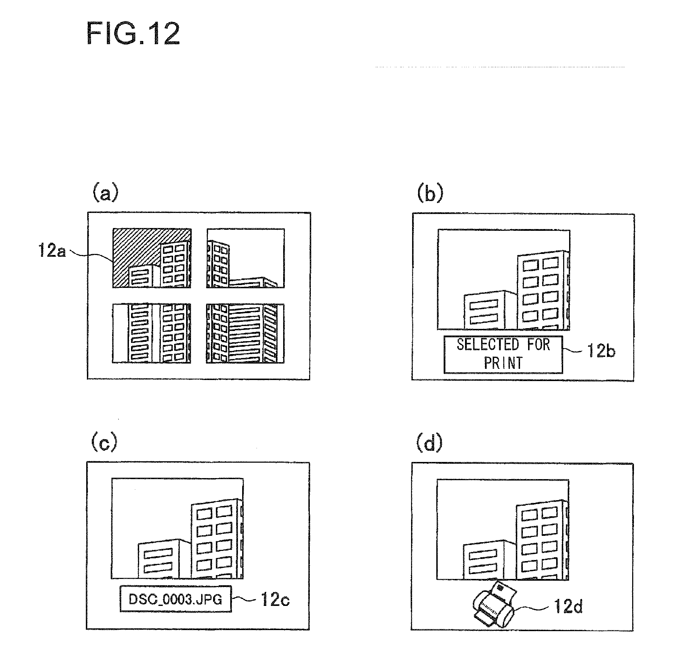

In addition, the CPU 106 in this embodiment distinguishes any set of image data having already been selected as a print target, among the various sets of image data displayed in the separate window, by appending information indicating that the particular set of image data has been selected as a print target. For instance, the CPU 106 may display image data 12a having already been selected as a print target in a different display color, as shown in FIG 12(a) or the CPU 106 may display a character string 12b that reads "selected for print" in correspondence to the image data that have already been selected as a print target, as shown in FIG 12(b).

As an alternative, it may display a character string 12c providing the file name of the image data that have been selected as a print target, as shown in FIG 12(c), or it may display an icon 12d indicating that the particular set of image data has already been selected as a print target, as shown in FIG 12(d). Any of these display modes allows the user to ascertain with ease a set of image data that has already been selected as a print target.

The following advantages are achieved through the fourth embodiment described above.
(1) As the user selects a specific MP file by moving the cursor to the MP file on the print instruction screen, the CPU 106 brings up a separate window providing an at-a-glance display of the plurality of sets of image data held in the MP file to allow the user to specify print target image data. As a result, the user is able to designate any image data in the MP file as a print target with ease.
(2) When bringing up a separate window providing an at-a-glance display of a plurality of sets of image data in an MP file containing image data that have already been selected as print target image data, the CPU 106 appends information indicating that the particular image data have already been selected as a print target. As a result, the user is able to ascertain with ease any set of image data that has already been selected as a print target.
(3) The CPU 106 indicates that a given set of image data has already been selected as a print target by adopting at least one of the display modes shown in FIG 12, i.e., a mode in which the image already selected as print target image data is displayed in a different color, a mode in which a character string indicating that the image has already been selected as print target image data is displayed, and a mode in which an icon indicating that the image has already been selected as print target image data is displayed. As a result, the user is able to visually ascertain the exact image data having already been specified as a print target.

### (Variations)

It is to be noted that the digital cameras achieved in the embodiments described above allow for the following variations.
(1) In the first and second embodiments described above, the CPU 106 assigns an SP file sourced from an MP file with a file name having the first three letters "MLT" so as to distinguish the SP file from standard SP files recorded through photographing processing, which are assigned with file names invariably starting with the three letters "DSC". In addition, a clear correlation between an SP file sourced from an MP file and the source MP file is established in the third embodiment by ensuring that the two image files share the same numerals, i.e., the same file number, in their file names. As an alternative, the CPU 106 may adopt these two methods in combination in order to establish a correlation between the two image files. For instance, the CPU 106 may assign a file name "MLT_0005.JPG" to an SP file created by extracting a set of JPEG data specified by the user among the sets of JPEG data in the MP file (DSC_0005.JPM) 6a in FIG 6.
(2) In the first embodiment described above, the print instruction processing is executed in the digital camera 100 in compliance with the DPOF (registered trademark). However, the print instruction processing in compliance with the DPOF (registered trademark) can be executed simply by recording a print target image file (SP file) and the DPOF (registered trademark) information into the memory card 110a, and thus, the present invention may be adopted in print instruction processing executed at a device other than the digital camera 100, e.g., a personal computer or an electronic device such as a portable telephone, with a built-in memory card slot or an external memory card slot.
(3) The CPU 106 in the second embodiment described earlier may delete the SP file having been created based upon the MP file from the memory card 110a upon completing the print job.
(4) The SP file created by the CPU 106 in any of the first through fourth embodiments described above may contain JPEG data and thumbnail data and display image data corresponding to the JPEG data, or it may be a file that does not contain any extra data, such as thumbnail data, other than the JPEG data.
(5) Whenever an SP file is created by sourcing an MP file in the first through fourth embodiments, an image expressed with the data in the newly created SP file (e.g., the SP file 6b (NLT_0010.JPG) in FIG 6) may be brought up on display on the screen. In addition, such an image may be brought up on display on the screen already up when the SP file is created, or it may be brought up in a new image display after closing the current display screen. The SP file image brought up on display either way may include identification information indicating that it has been created by sourcing an MP file.

When displaying the image in the SP file having been created as described above, the same image (the generation source image based upon which the SP file has been created) may be taken out of the MP file on display. As an alternative, upon creating an SP file based upon an MP file, information clearly indicating that a print instruction has been issued (in compliance with DPOF) for an image in the MP file may be simply presented to the user instead of displaying the newly created SP file containing an image identical to the one in the source MP file. Through any of these measures, it is ensured that the user does not select a single image twice as a print target.
(6) While the first through fourth embodiments have been described by assuming that the main image data are JPEG data, the present invention is not limited to this example and it may be adopted in conjunction with main image data assuming any other data format.
(7) In the fourth embodiment, any of the display modes shown in FIG 12 may be adopted to indicate that a given set of image data within an MP file has already been selected as a print target. However, display modes that may be adopted to indicate an existing print target image are not limited to those shown in FIG 12. For instance, the DPOF (registered trademark) logo mark may be displayed in correspondence to any image in an MP file having been selected as a print target in compliance with DPOF (registered trademark). In addition, the PictBridge (registered trademark) logo mark may be displayed in correspondence to any image in an MP file having been specified as a print target in compliance with PictBridge (registered trademark).
(8) While the print instruction information indicates the print copy quantity (number of sheets of print) in the first embodiment described earlier, the print instruction information may instead indicate the date/time or the like to be printed together with the image. Furthermore, the print instruction information may also indicate a specific position at which the date/time is to be printed in the image, e.g., the upper left corner, the upper right corner, the lower left corner or the lower right corner of the image. It is to be noted that a setting indicating a specific type of print instruction information to be created may be selected before the print target image is selected or it may be selected immediately before the print instruction information is written (immediately before step S807 in FIG 7).

As long as the features characterizing the present invention are not compromised, the present invention is not limited to any of the specific structural particulars described in reference to the embodiments. In addition, any of the embodiments described above may be adopted in combination with a plurality of variations.

## Claims

1. An electronic device, comprising:
a setting unit that sets at least one set of image data among a plurality of sets of image data in a first image file containing the plurality of sets of image data as print target image data;
an image file creation unit that creates a second image file corresponding to each set of print target image data having been set by the setting unit; and
an image recording unit that records the second image file, having been created by the image file creation unit, into a storage medium.

2. An electronic device according to claim 1, further comprising:
a print information recording unit that generates print information for the print target image data having been set by the setting unit and records the print information into the storage medium.

3. An electronic device according to claim 1 or claim 2, further comprising:
a decision-making unit that makes a decision as to whether or not image data having been set as a print target by the setting unit is included in the first image file, wherein:
the image file creation unit creates the second image file if the decision-making unit determines that the image data having been set as the print target is image data included in the first image file but does not create the second image file if the decision-making unit determines that the image data having been set as the print target is not image data included in the first image file.

4. An electronic device according to any one of claim 1 through claim 3, further comprising:
a correlating unit that correlates image data contained in the second image file having been created by the image file creation unit to the first image file from which the print target image data originate.

5. An electronic device according to claim 4, wherein:
the correlating unit correlates the image data in the second image file to the first image file by matching part of a file name assigned to the second image file with part of a file name of the first image file from which the print target image data originate.

6. An electronic device according to claim 5, wherein:
the correlating unit correlates the image data in the second image file to the first image file by matching a number included in the file name assigned to the second image file with a number included in the file name of the first image file from which the print target image data originate.

7. An electronic device according to any one of claim 1 through claim 6, wherein:
if the second image file is already recorded in the storage medium and the recorded second image file has been created based upon the same first image file as the first image file from which the second image file to be newly recorded is sourced, the image recording unit records the new second image file by writing the new second image file over the previously recorded second image file.

8. An electronic device according to claim 7, wherein:
before recording the new second image file by writing the new second image file over the previously recorded second image file, the image recording unit issues an inquiry to the user asking whether or not to proceed with an overwrite and the image recording unit proceeds with the overwrite if the user permits the overwrite, but the image recording unit records the new second image file under a file name different from the file name of the previously recorded second image file if the user does not permit the overwrite.

9. An electronic device according to any one of claim 1 through claim 8, wherein:
when the image file creation unit creates the second image file based upon image data in the first image file, the image file creation unit records information enabling identification of the image data used to create the second image data as part of additional information for the first image file and as part of additional information for the second image file, if the additional information in the first image file does not already include information enabling identification of the image data used to create the second image file.

10. An electronic device according to any one of claim 1 through claim 9, further comprising:
a message display unit that brings up on display at a display device a message indicating insufficient memory space if memory space available in the storage medium is not large enough to allow the second image file to be recorded therein.

11. An electronic device according to claim 10, wherein:
the message display unit brings up on display a message including information indicating an image file that can be transferred to another storage medium in order to increase available memory space in the storage medium.

12. An electronic device according to any one of claim 1 through claim 9, further comprising:
an internal memory where data are recorded; and
an image transfer unit that transfers an image file among image files recorded in the storage medium into the internal memory if the storage medium does not have sufficient memory space to allow the second image file to be recorded therein.

13. An electronic device according to claim 12, wherein:
the image transfer unit identifies an image file to be transferred in order to secure sufficient memory space to allow the second image file to be recorded among the image files recorded in the storage medium, based upon the memory space currently available in the storage medium, a data size of the second image file to be recorded and data sizes of the image files recorded in the storage medium, and transfers the identified image file to the internal memory.

14. An electronic device according to any one of claim 1 through claim 13, wherein:
the setting unit brings up an at-a-glance display of image files recorded in the storage medium and brings up an at-a-glance display of the plurality of sets of image data included in the first image file selected by the user from the image files in the at-a-glance display, so as to allow the user to specify the print target image data.

15. An electronic device according to claim 14, wherein:
if the first image file includes image data already set as print target image data, the setting unit includes additional information indicating that the image data have already been selected as print target image data in the at-a-glance display of the plurality of sets of image data in the first image file displayed.

16. An electronic device according to claim 15, wherein:
the setting unit provides the additional information indicating that the image data have already been set as print target image data through at least one of methods whereby; (1) an image expressed with the image data already set as print target image data is displayed in a different color, (2) a character string indicating that the image data have already been set as print target image data is displayed and (3) an icon indicating that the image data have already been set as print target image data is displayed.

17. A camera, comprising:
a setting unit that sets at least one set of image data among a plurality of sets of image data in a first image file containing the plurality of sets of image data as print target image data;
an image file creation unit that creates a second image file corresponding to each set of print target image data having been set by the setting unit;
an image file recording unit that records the second image file having been created by the image file creation unit, into a storage medium; and
a transmission unit that transmits the second image file having been created by the image file creation unit to a printing device.

18. A camera according to claim 17, further comprising:
a decision-making unit that makes a decision as to whether or not image data having been set as a print target by the setting unit is included in the first image file, wherein:
the image file creation unit creates the second image file if the decision-making unit determines that the image data having been set as the print target is image data included in the first image file but does not create the second image file if the decision-making unit determines that the image data having been set as the print target is not image data included in the first image file.

19. A camera according to claim 17 or claim 18, further comprising:
a correlating unit that correlates image data contained in the second image file having been created by the image file creation unit to the first image file from which the print target image data originate.

20. A camera according to claim 19, wherein:
the correlating unit correlates the image data in the second image file to the first image file by matching part of a file name assigned to the second image file with part of a file name of the first image file from which the print target image data originate.

21. A camera according to claim 5, wherein:
the correlating unit correlates the image data in the second image file to the first image file by matching a number included in the file name assigned to the second image file with a number included in the file name of the first image file from which the print target image data originate.

22. A camera according to any one of claim 17 through claim 21, wherein:
if the second image file is already recorded in the storage medium and the recorded second image file has been created based upon the same first image file as the first image file from which the second image file to be newly recorded is sourced, the image recording unit records the new second image file by writing the new second image file over the previously recorded second image file.

23. A camera according to claim 22, wherein:
before recording the new second image file by writing the new second image file over the previously recorded second image file, the image recording unit issues an inquiry to the user asking whether or not to proceed with an overwrite and the image recording unit proceeds with the overwrite if the user permits the overwrite, but the image recording unit records the new second image file under a file name different from the file name of the previously recorded second image file if the user does not permit the overwrite.

24. A camera according to any one of claim 17 through claim 23, wherein:
the setting unit brings up an at-a-glance display of image files recorded in the storage medium and brings up an at-a-glance display of the plurality of sets of image data included in the first image file selected by the user from the image files in the at-a-glance display, so as to allow the user to specify the print target image data.

25. A camera according to claim 24, wherein:
if the first image file includes image data already set as print target image data, the setting unit includes additional information indicating that the image data have already been selected as print target image data in the at-a-glance display of the plurality of sets of image data in the first image file displayed.

26. A camera according to claim 25, wherein:
the setting unit provides the additional information indicating that the image data have already been set as print target image data through at least one of methods whereby; (1) an image expressed with the image data already set as print target image data is displayed in a different color, (2) a character string indicating that the image data have already been set as print target image data is displayed and (3) an icon indicating that the image data have already been set as print target image data is displayed.

27. A camera, comprising:
an image memory where image data are temporarily recorded;
a setting unit that sets at least one set of image data among a plurality of sets of image data in a first image file containing the plurality of sets of image data, as print target image data;
an image file creation unit that creates a second image file corresponding to each set of print target image data having been set by the setting unit and records the second image file into the image memory for temporary storage; and
a transmission unit that transmits the second image file having been created by the image file creation unit to a printing device.

28. A print target image file creation method, comprising:
making a decision as to whether or not a single image file having been specified contains a plurality of sets of image data;
identifying a single set of print target image data among the plurality of sets of image data upon deciding that the specified image file contains a plurality of sets of image data;
creating a new image file containing the single set of image data having been identified; and
recording the image file having been newly created into a recording medium.
